(19) Europäisches Patentamt
European Patent Office
Office européen des brevets

(11) EP 4 361 887 A1

(12) EUROPEAN PATENT APPLICATION

(43) Date of publication:
01.05.2024 Bulletin 2024/18

(21) Application number: 22306617.6

(22) Date of filing: 25.10.2022

(51) International Patent Classification (IPC):
$G06N\ 3/0455^{(2023.01)}$ $G06N\ 3/084^{(2023.01)}$
$G06N\ 3/088^{(2023.01)}$ $H04N\ 19/147^{(2014.01)}$

(52) Cooperative Patent Classification (CPC):
G06N 3/0455; G06N 3/084; G06N 3/088;
H04N 19/117; H04N 19/147; H04N 19/167;
H04N 19/17; H04N 19/46

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• Fondation B Com
35510 Cesson Sevigne (FR)
• Orange
75015 Paris (FR)

(72) Inventors:
• ABDOLI, Mohsen
35235 Thorigné-Fouillard (FR)
• HENRY, Félix
35760 Saint-Grégoire (FR)
• CLARE, Gordon
35740 Pacé (FR)

(74) Representative: Cabinet Beau de Loménie
158, rue de l'Université
75340 Paris Cedex 07 (FR)

(54) **METHOD FOR ENCODING AN INPUT SIGNAL USING NEURAL NETWORK AND CORRESPONDING DEVICE**

(57) The present invention concerns a method for encoding an input signal comprising
- Obtaining at least a second latent representation of said input signal, by modifying a first Neural Network encoded latent representation of said input signal obtained from a neural network encoder which coefficients are frozen, by using a metric based on

- said input signal,
- said first Neural Network encoded latent representation, and
- a decoded signal obtained from the decoding of the first Neural Network encoded latent representation of said input signal, using a neural network decoder which coefficients are frozen.

FIG.2

**Description**

Field of the disclosure

The present invention concerns the field of signal coding and decoding using neural networks.

Description of the Related Art

Digital technologies are taking an increased importance in the daily life and especially video streaming. Its usage is growing so its environmental impact becomes a topic of importance. Standardization organisms such as MPEG and ITU contribute to the efforts of reducing video streaming impact and have released several video coding standards, reducing the size of videos while maintaining an acceptable visual quality. Neural-based (NN) encoders and decoders have been introduced in the video encoding and decoding process and provide improved performances, enabling a reduction of the volume of streamed data but their use in video codecs remain still challenging in terms of configuration. Several proposed solutions introducing neural network in video compression still lack of compression efficiency. Indeed, in real-world video communication applications, it is quite often required that an encoder applies specific arbitrary rate distortion optimization (RDO) strategies, depending on different factors. Factors determining what RDO strategy to be taken could be related to signal characteristics, encoder device characteristics, bandwidth constraints etc. In overall, the goal of an RDO algorithm is to minimize the rate of compressed signal in a given quality level. Or in other words, improving the decoded quality of the compressed signal in a given rate level.

The functionality of a typical encoder, not a neural network encoder, is usually flexible enough to permit a certain degree of freedom for applying RDO strategies and choose between alternative compressed representations of the same input signal. However, using Neural Network encoders, given a pre-trained pair of encoder-decoder, the process of compressing a video signal with the encoder is carried out through a mapping from the pixel-domain to the latent-domain. This mapping is as unbending as using a look-up table, where to find out what latent-domain point corresponds to a given pixel-domain input, one should pass the input through the layers of the NN encoder, whose internal parameters are already trained. Therefore, the current solution to apply a different mapping for the same input video is to re-train the pair of NN encoder-decoder, such that it takes into account a training loss function corresponding to the desired strategy. However, this process is expensive in terms of time and resources and given the high diversity of possible RDO strategies, it is unfeasible to re-train for all cases.

The present disclosure proposes to solve at least one of these drawbacks. Summary of the disclosure

In this context, the present disclosure proposes a method for encoding an input signal comprising

- Obtaining at least a second latent representation of said input signal, by modifying a first Neural Network encoded latent representation of said input signal obtained from a neural network encoder which coefficients are frozen, by using a metric based on

    - said input signal,

    - said first Neural Network encoded latent representation, and

    - a decoded signal obtained from the decoding of the first Neural Network encoded latent representation of said input signal, using a neural network decoder which coefficients are frozen.

The present disclosure concerns also an apparatus for encoding an input signal comprising one or several processors configured alone or in combination to:

- Obtain at least a second latent representation of said input signal, by modifying a first Neural Network encoded latent representation of said input signal obtained from a neural network encoder which coefficients are frozen, by using a metric based on

    - said input signal,

    - said first Neural Network encoded latent representation, and

    - a decoded signal obtained from the decoding of the first Neural Network encoded latent representation of said input signal, using a neural network decoder which coefficients are frozen

Thanks to the disclosed method and apparatus, a neural network encoder and a neural network decoder are used for encoding an input signal and a metric is then applied to the input signal. The metric is applied by using the first encoded latent representation, said first latent representation being obtained further to the encoding of the input signal by the encoder, and also to the decoded signal obtained further to the decoding of the first latent representation, the decoding being performed by the decoder. Typically, but not only, the encoder and the decoder may have been trained together. The Neural network encoder and the Neural network decoder have coefficients which are frozen, or fixed or determined, which are not modified by the current method..

Thanks to this, a specific RDO strategy can be applied to the input signal. Said specific RDO strategy is defined thanks to a metric. Therefore, the metric depending on the input signal, or which parameters depend on the input signal, may be applied. The decoder parameters (also called weights or coefficients) are determined (or frozen) and the decoder is then used with these parameters. An encoder with frozen coefficients provides at the end a single latent representation of the input signal, as this single latent representation is obtained further to the encoding with the predetermined coefficients. The first latent representation does not enable to obtain an encoded signal according to a predetermined RDO strategy as trained when the encoder is trained on a generic data set. The present disclosure provides an alternative latent representation, with a specific RDO strategy, without the need to re-train either of encoder or decoder, therefore providing an efficient and fast coding method.

According to some implementations, the first and the second latent representations are computed to be decoded by a Neural Network decoding method, typically trained together with a Neural Network encoding method used for encoding the first latent representation.

According to some implementations, obtaining said at least second latent representation comprises an iterative process comprising at least one iteration, wherein said iteration receives as input,

- for a first iteration step, the first latent representation of the input signal, the input signal and said decoded signal obtained from a decoding of said first latent representation, and wherein,

- for the next iteration steps, said first latent representation is replaced by the output of a former iteration step.

According to some implementations, said metric is obtained by said iterative process by computing at least a post processing loss function, wherein said second latent representation is obtained as the output of said post processing loss function minimization.

According to some implementations, said at least first Neural Network encoded representation of the input signal is obtained by an encoding method computing a training loss function, said training loss function and said post processing loss function being the same functions.

According to some implementations, said at least first Neural Network encoded representation of the input signal is obtained from an encoder computing a training loss function and said iteration process computes at least one processing loss function which is different from said training loss function

According to some implementations, wherein said iterative process computes said post-processing loss function using parameters which are different for some parts of the input signal.

Thanks to this particular implementation, specific strategies can be applied to at least some parts of the input signal. This enables to improve the encoding of some parts of the input signal. For instance, different rate distortion strategies can be applied on different parts of the signal.

According to some implementations, the at least first Neural Network encoded representation of the input signal is obtained by an encoding method computing a training loss function and the at least one post processing loss function uses parameters which, for at least some of them, are different from parameters of a training loss function

According to some implementations, the input signal is representative of an image or a video signal, the at least two parts of the input signal are representative, at least for one of them, of a region-of-interest.

In this specific implementation, it may become possible to dedicate more bits for the encoding of one or more regions of interest, to improve the user experience when viewing or retrieving content. This may be of interest also for broadcasting content, and adapted to specific content as gaming or sports events, when input signal represents video representing a lot of movement for instance.

According to some implementations, the training loss function and the post processing loss function are function of a distortion factor, and a rate factor multiplied by a rate-distortion coefficient, and said loss function and said processing function parameters differ in their rate-distortion coefficient values.

According to some implementations, the training loss function and the post processing loss function are function of a distortion factor, and a rate factor multiplied by a rate-distortion coefficient, and the loss function and the processing function parameters differ in their distortion factor.

According to some implementations, the post processing loss function receives as input an auxiliary signal comprising information representative of said parts of the input signal.

According to some implementations, the information comprised in said auxiliary signal is chosen among at least one of:

  a. A distortion mask comprising weights associated with at least some pixels of the input signal,
  b. A spatial identification of at least one group of pixels of the input signal,
  c. A patch to be applied on at least one part of the decoded input signal.

According to some implementations, the auxiliary signal is a distortion mask, said post processing loss function computes a distortion factor based on pixel-wise multiplication of said distortion mask by a difference between said input signal and the corresponding decoded signal.

According to some implementations, the auxiliary signal is a patch, said post processing loss function computes an overlay signal based on the decoded signal and said patch and computes a distortion factor based on the difference between said computed overlay signal and said decoded signal.

.According to another aspect, the present disclosure concerns also a computer program product comprising instructions which, when the program is executed by one or more processors, causes the one or more processors to perform the method according to the present disclosure.

According to another aspect, the present disclosure concerns also a computer readable storage medium having stored thereon instructions for causing one or more processors to perform the method according to the present disclosure.

According to another aspect, the present disclosure concerns also a method for encoding an input signal comprising

-  Obtaining at least a second latent representation of said signal, by modifying a first Neural Network encoded latent representation of said input signal obtained from a neural network encoder which coefficients are frozen, by using a metric based on

      - said input signal,
      - a random signal, and
      - a decoded signal obtained from the decoding of the input signal, said encoded input signal being encoded by said neural network encoder, said decoding being obtained from a neural network decoder which coefficients are frozen.

According to this specific aspect of the disclosure, there is no need to have the first latent representation available for the method. Instead a random is signal is used. Thanks to this implementation, the input signal is post processed without the need to have the encoder available, as the first latent representation is no more used. Only the decoder will be used to decode the post-processed signal.

According to another aspect, the present disclosure concerns also an apparatus for encoding an input signal comprising one or several processors configured alone or in combination to

-  Obtain at least a second latent representation of the input signal, by modifying a first Neural Network encoded latent representation of the input signal obtained from a neural network encoder which coefficients are frozen, by using a metric based on

    -  said input signal,
    -  a random signal, and
    -  a decoded signal obtained from the decoding of the input signal, said encoded input signal being encoded by said neural network encoder, said decoding being obtained from a neural network decoder which coefficients are frozen.

According to another aspect, the present disclosure concerns also a signal comprising a bitstream comprising coded data representative of a second latent representation of a signal, said second representation being obtained by modifying a first Neural Network encoded latent representation of said input signal obtained from a trained neural network encoder, by using a metric based on

-  said input signal,

-  said first Neural Network encoded latent representation, and

-  a decoded signal obtained from the decoding of the first Neural Network encoded latent representation of said input signal, obtained from a neural network decoder trained with said trained neural network encoder.

These and other aspects, features and advantages of the general aspects will become apparent from the following detailed description of exemplary embodiments, which is to be read in connection with the accompanying drawings.

Brief Description of the Drawings

Figure 1 illustrates a general overview of a first embodiment of a system comprising a Neural network encoder and decoder.

Figure 2 illustrates a general overview of an encoder and decoder according to some implementations of the present disclosure.

Figure 3 illustrates a first implementation of a distortion computation according to some implementations of the present disclosure.

Figure 4 illustrates a second implementation of a distortion computation according to some implementations of the present disclosure.

Figure 5 illustrates an implementation of a distortion computation to an overlay signal according to some implementations of the present disclosure.

Figures 6a and 6b illustrate implementations where a post-processing loss function uses parameters which are different for some parts of the input signal.

Figure 7 illustrates an implementation of the present disclosure using a random signal.

Figure 8 illustrates an example of the hardware architecture of an encoder according to some implementations of the present disclosure.

Figure 9 illustrates a general overview of a second embodiment of a system comprising a Neural network encoder and decoder.

Figure 10 illustrates an implementation of a distortion computation according to some implementations of the present disclosure.

Detailed Description of Example Embodiments

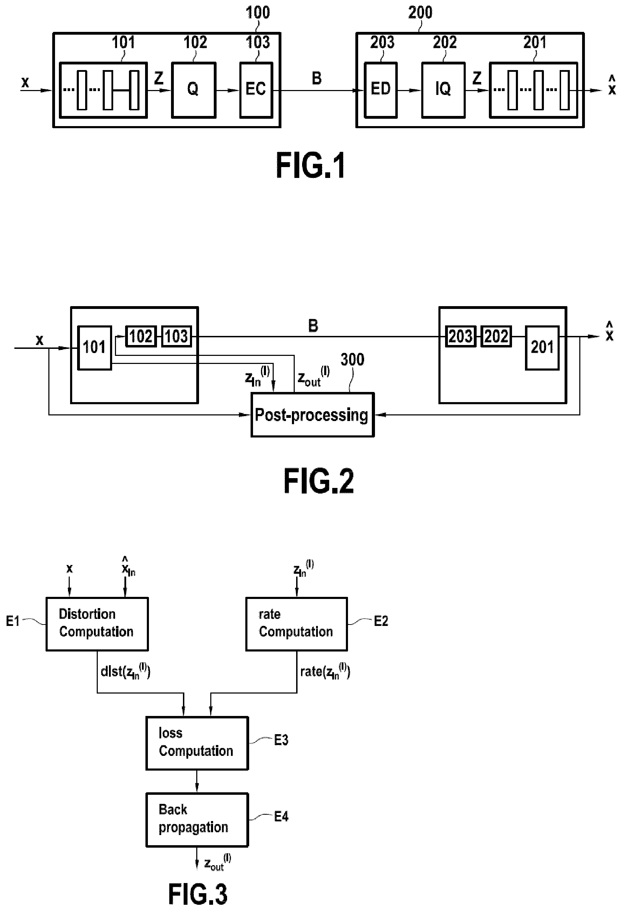

Figure 1 illustrates an overview of both an encoder 100 and a decoder 200 used for encoding and decoding an input signal x. By signal, one can understand any signal that would be coded (or compressed) for transmission in order to reduce the size of the data to be transmitted. Therefore, by signal one can understand an image, a video signal but also an audio signal, a combination of both or other signals for which compression would we useful to gain transmission bandwidth or storage capacities, for instance.

The following description will refer to the encoding and decoding of images or video but this is given as an illustrative input signal and should not be limited to it.

A system for providing neural network encoding and obtaining coefficients of a neural network encoder and decoder may be found in the paper from Ballé, Johannes, Valero Laparra, and Eero P. Simoncelli. "End-to-end optimized image compression" under reference arXiv:1611.01704 (2016).

As illustrated in figure 1, both encoder 100 and decoder 200 are neural network based encoder and decoder. A neural network used for encoding, 101, transforms the input signal from the pixel domain into a domain represented by neural network latents. This transformation is followed by a quantization step, 102, and an entropy coding step, 103. Inversely, a neural network for decoding, 201, performs a transformation of neural network latents into pixels. Prior to this inverse transformation, an entropy decoding, 203, and an inverse quantization, 202, are performed. Typically, a pair of neural network used for encoding and neural network used for decoding is trained jointly.

The neural network encoder 101 and the neural network decoder 201 are each defined by a structure, comprising for example a plurality of layers of neurons and/or by a set of weights associated respectively with the neurons of the network concerned. Later in the descriptions weights or coefficients may be used indifferently when referring to neural networks structure or parameters.

A representation (for example two-dimensional) of the current image x (or, alternatively, of a component or a block of the current image x) is applied as input (i.e. on a layer of the input (i.e. on an input layer) of the artificial neural network of coding neural network 101. The artificial neural network of coding 101 then produces at the output of the data, in this case a data unit.

Subsequently, the data (here the data unit) are applied as input to the decoding neural network 201. The decoding neural network 201 then produces as output a representation for $\hat{x}$ for example two-dimensional) which corresponds to the current image x (or, alternatively, to the component or block of the current image x).

The coding neural network 101 is designed such that the data unit contains an amount of data that is smaller (at least on average) than the aforementioned representation of the current image x. In other words, the data in the data unit is compressed.

According to neural network encoding, NN encoder 101 produces a first latent representation of signal x, called z. Latent variable z may then be quantized into quantization indices I, and the indices may be entropy-coded to form a bitstream B that is representative of the input signal. The bitstream may be stored or transmitted. However, for the sake of simplification, we will not describe here the quantization and the entropy coding steps. Encoder 100 may therefore comprise a quantizer 102 and an entropy coder 103 and decoder 200 may comprise an entropy decoder 203 and a dequantizer 202.

As mentioned earlier, NN based encoder and decoder are defined by a structure, comprising for example a plurality of layers of neurons and/or by a set of weights associated respectively with the neurons of the network concerned. A neural network architecture is defined by the number, size, type and interaction of its NN layers.

In some implementations, the function of each neuron consists of a linear operation on its inputs, followed by a non-linear activation operation. In most advanced applications of NN encoding and decoding, notably in image and video processing, a more sophisticated type of network layer, called convolutional layer, is usually used. In its simplest form, a convolutional layer is a rectangular filter that slides on its two-dimensional input signal and at each sliding position applies a convolutional operation to generate its output layer.

A learned-based end-to-end codec (i.e a pair of NN encoder and NN decoder) is defined by the NN encoder and NN decoder which are often optimized jointly. The latent variable z is the common link between these NN encoder and decoder as being the output of the encoder and the input of the decoder.

The encoding neural network 101 and the decoding neural network 201 are furthermore trained beforehand so as to minimize the differences between the input representation of the current image x and its output representation $\hat{x}$, while also minimizing the amount of data that transit between the encoding neural network 101 and the decoding neural network 201.

To this end, both the NN encoder 101 and the NN decoder 201 are trained on a set of input signals. The NN encoder and NN decoder obtained further to this training can be considered as generic NN encoder and decoder. The term generic means here that these encoders are not dedicated to the encoding of some specific signals. For instance, they are not trained to encode differently regions of interest from other regions of an image.

The training of the NN encoder 101 and the NN decoder 201 might or might not have been carried out jointly.

Once the neural network architecture is determined, the parameters are computed in order to optimize the NN encoding and decoding. Typically, gradient descent and back propagation are used. A training loss function is computed using the input signal and the decoded signal as input. The training of the neural network consists in several iterations in which the input data set consisting of several images for instance, is entered and used for obtaining the most appropriate coefficients of the NN encoder and decoder. A repetitive process is carried out to improve the overall performance of the neural network in terms of previously defined loss function.

Let $\theta = <\theta_{enc}, \theta_{dec}>$ represent a set of all NN model parameters of the codec, consisting of model parameters of encoder $\theta_{enc}$ and decoder $\theta_{dec}$. Given such model parameters, the process of encoding input x to obtain latent representation z is expressed as $z = E(x; \theta_{enc})$. Correspondingly, the process of decoding latent representation z to obtain the representation $\hat{x}$ (or reconstructed signal) expressed as $\hat{x} = D(z; \theta_{dec})$. Moreover, once z is computed, one can use an arbitrary entropy coder engine, denoted as *EC*, in order to write z in bitstream as well as to compute its rate, which is *rate(z) = EC(z)*.

The training loss function can be specified as:

$$[\text{MATH. 1}] \quad L_{train}(x;\theta) = dist_{train}(x,\hat{x}) + \lambda_{train}.rate(z)$$

$$[MATH.\ 2]\ dist_{train} = \|x - \hat{x}\|^2 = \|x - D(z; \theta_{dec})\|^2 = \|x - D(E(x; \theta_{enc}); \theta)\|^2$$

Where the function "dist" computes the distortion between the input signal and its corresponding decoded signal and the function "rate" computes the rate of the latent representation.

Let $\theta_{train-codec}^n =< \theta_{train-enc}^n, \theta_{train-dec}^n >$ represent the set of all NN model parameters of the NN encoder and decoder at iteration n. In other words, it consists of model parameters of encoder (enc) and decoder (dec). Then

$$[MATH.\ 3]\ \theta_{train-codec}^{n+1} = \theta_{train-codec}^n - \eta \nabla_{\Theta} L_{train}\left(X; \theta_{train-codec}^{(n)}\right)$$

Where $\eta$ represents the learning rate, $\nabla_{\Theta}$ represents the gradient, and X the training set of signals x.

Once trained, the set of optimized codec parameters denoted as $\theta^* =< \theta_{enc}^*, \theta_{dec}^* >$ are obtained. For actual encoding, each input of the NN encoder 101 is encoded to obtain a latent representation z for further decoding with the NN decoder 201. Each input signal is encoded using the NN encoder which parameters have been trained once. Therefore, the parameters of the NN encoder are not modified neither during actual encoding or actual decoding phases (i.e. once the parameter optimization is finished).

Compared to conventional encoders, there is no adaptation of the tools and parameters of the codec to apply encoding-time Rate distortion optimization. Only one latent representation z can be provided for the input signal x, therefore avoiding any possibility to apply specific RDO strategies according to the characteristics of the input signal.

Figure 2 illustrates an implementation of a system comprising an encoder as proposed by the present disclosure and a decoder.

The present disclosure proposes a method to obtain at least another latent representation of the input signal, representing an alternative to the first latent representation, without the need of training back the codec 101/201 and which latent representation is also decodable by the trained decoder 201. Therefore, the following encoding device or method is able to adapt the coding/decoding framework to the content to be encoded and decoded.

A system according to the present disclosure may comprise at least an encoder 100, a decoder 200 and a post processing function 300. It may be embodied as a device comprising several components not shown on figure 2. Examples of such devices may be various electronic devices such as personal computers, laptop computers, smartphones, tablet computers, digital multi-media set-top boxes, digital television receivers, personal video recorders, connected home appliances, and servers. Elements of encoder 100, decoder 200, and post processing function 300 singly or in combination, may be embodied in a single integrated circuit, multiple ICs, and/or discrete components. In some embodiments, the multiple components may also comprise communication buses or interfaces to interact with additional devices. In various embodiments, the system described in figure 2 is configured to implement one or several aspects of the present disclosure.

Main function of encoders and decoders are not detailed in the present disclosure as they represent well known encoding steps and include for instance intra or inter prediction; motion estimation and compensation, prediction residuals calculation, quantization and entropy coding...Same for the decoder functions, which also consist in decoding the entropy coded bitstream, to obtain transform coefficients, motion vectors and other coded information, dequantize the coefficients and decode the prediction residuals to be combined with predicted block to reconstruct the image.

The present disclosure proposes here according to some implementations, a method and an apparatus for encoding an input signal. The method comprises:

- Obtaining at least a second latent representation of the input signal, by modifying a first Neural Network encoded latent representation of the input signal obtained from a neural network encoder which coefficients are frozen, by using a metric based on

  - the input signal,
  - the first Neural Network encoded latent representation, and
  - a decoded signal obtained from the decoding of the first Neural Network encoded latent representation of the input signal, obtained from a neural network decoder which coefficients are frozen.

The coefficients of the NN encoder and of the NN decoder are frozen and therefore there is no specific need to have the encoder available but only a first latent representation of the input signal.

According to some implementations, the first and the second latent representations are computed to be decoded by a Neural Network decoding method trained together with a Neural Network encoding method used for encoding the first latent representation.

Encoder 100 comprises a NN encoder 101 and decoder 200 comprises a NN decoder 201. In some embodiments, they may have been trained together as a pair. In some embodiments, they may not have been trained together.

They have been trained using a generic, not specific training set of data. Once trained, the coefficients of the NN encoder 101 and NN decoder 201 are set and are no more modified; they define the NN encoder and decoder and may be stored for instance or considered as frozen, no more modifiable. Therefore, only one single latent representation of input signal x is generated thanks to NN encoder 101 or encoder 100.

According to this implementation, a post processing function 300 is used for generating at least one additional latent representation $z_{out}$ of signal x. $z_{out}$ is the latent signal used by the decoder 200 to decode signal x and obtain, at the decoding, decoded signal $\hat{x}$.

As mentioned earlier, the post-processing function 300 receives as input a first latent representation $z_{in}$, the input signal x and the corresponding decoded signal $\hat{x}$.

In some implementations, the post processing function 300 may comprise one or several iterations, each providing another latent representation of the input signal. A latent representation is decodable if its corresponding decoder model is able to process it through its layers and generate a pixel-domain reconstruction of it. There is typically more than one latent representation of an input signal that can be decoded by a given decoder. Therefore, a learned based end-to-end codec is free to decide which latent representation is chosen, as long as the chosen latent representation is decodable.

According to some implementations, when the post processing function 300 comprises an iteration process comprising at least one iteration, wherein said iterative process receives as input,

- for a first iteration step, the first latent representation of the input signal, the input signal and said decoded signal obtained from a decoding of said first latent representation, and wherein,

- for the next iteration steps, said first latent representation is replaced by the output of a former iteration step.

As can be seen on figure 2, the post processing function 300 receives, for an iteration i, an input signal, $z_{in}^{i}$ and outputs a signal $z_{out}^{(i)}$. Signal $z_{out}^{(i)}$ is the latent representation decoded by decoder 200.

According to some implementations, input signal, $z_{in}^{(i)}$ may be:

- the first latent representation,

- the output of a former iteration of the post processing function. It can be a former iteration or the former iteration.

According to some implementations, the iteration process computes a post processing loss function. Embodiments of this post-processing loss function are described in reference to figures 3, 4, 6 and 7.

In some implementations, as described with reference to figure 3, the post processing loss function $l_{pp}$ can be specified by:

$$[\text{MATH. 4}]\ L_{pp}(z_{in}^{(i)}; \theta^*) = dist_{pp}(x, \hat{x}) + \lambda_{pp}. rate(z_{in}^{(i)})$$

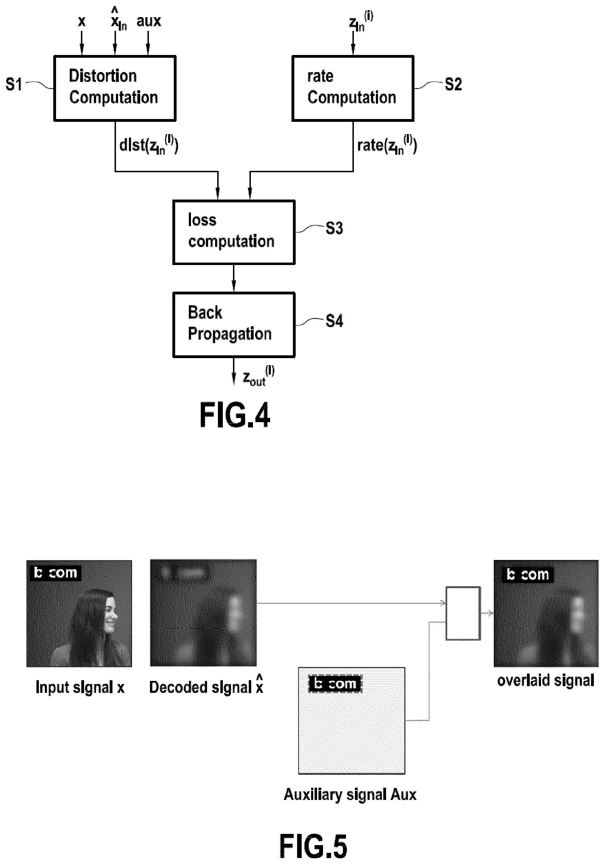

In other implementations, such as the one of figure 4 but not limited to, the distortion function can be different and take into account additional signals.

As described earlier, the first latent representation of the input signal has been obtained by an encoding method computing a training loss function. According to some implementations, the post processing loss function uses parameters which are the same parameters as parameters of the training loss function. The advantage of this approach is that it allows the encoding to find an alternative latent representation which outperforms the one that was obtained by the network in terms of the same metric/loss function that has been used in training. In other words, this allows an RDO-like search in the space of all latents to improve the compression efficiency, as is typically done in conventional codecs.

$$dist_{train} = dist_{pp} \text{ or } \lambda_{train} = \lambda_{pp}$$

As described earlier, the first latent representation of the input signal has been obtained by an encoding method computing a training loss function. According to some implementations, said post processing loss function uses parameters which, for at least some of them, are different from parameters of the training loss function.

In such implementations, either:

$$dist_{train} \neq dist_{pp} \text{ or } \lambda_{train} \neq \lambda_{pp}$$

Or: $dist_{train} \neq dist_{pp}$ and $\lambda_{train} = \lambda_{pp}$

Or: $dist_{train} = dist_{pp}$ and $\lambda_{train} \# \lambda_{pp}$

According to some implementations, the training loss function $L_{train}$ and the post processing loss function $L_{pp}$ are function of a distortion factor, and a rate factor multiplied by a rate-distortion coefficient, wherein said loss function and said processing function parameters differ in their rate-distortion coefficient values.

In this embodiment:

$$\lambda_{train} \neq \lambda_{pp}$$

According to some implementations, the training loss function $L_{train}$ and the post processing loss function $L_{pp}$ are function of a distortion factor, and a rate factor multiplied by a rate-distortion coefficient, wherein said loss function and said processing function parameters differ in their rate-distortion coefficient values.

In this embodiment:

$$dist_{train} \neq dist_{pp}$$

According to some implementations, the post processing function minimizes the post processing loss function. The post processing loss function can be denoted as $L_{pp}^{(i)}(z_{in}^{(i)}; \Theta^*)$ to relate to the post processing function in connection with iteration i and input $z_{in}$ at iteration i. As the post-processing operates with fixed and pre-optimized encoder and decoder models, $\Theta^*$ denotes the parameters of such pre-optimized models.

The post processing loss function $L_{pp}^{(i)}(z_{in}^{(i)}; \theta^*)$ is a differentiable function of $z_{in}^{(i)}$. The gradient can then be computed and is denoted $\nabla_z L_{pp}^{(i)}(z_{in}^{(i)}; \theta^*)$.

The minimization of the post-process loss function is carried out by gradient descent with back-propagation of the post processing loss function. The output signal $z_{out}^{(i)}$ is obtained as follows:

$$[\text{MATH. 5}] \quad z_{out}^{(i)} = z_{in}^{(i)} - \eta \nabla_z L_{pp}^{(i)}(z_{in}^{(i)}; \theta^*)$$

Where $\eta$ represents the learning rate and $\nabla_z$ represents the gradient.

In some embodiments, $\eta$ may be adjusted according to the pace of minimization chosen.

In some embodiments, the post processing loss function may be modified from one iteration to the next or at least for some iterations. To this end, from one iteration to the other, either the distortion function $dist_{pp}$ or the rate

distortion coefficient $\lambda$ may be modified.

Figure 3 and 4 illustrate implementations of a method for calculating the post processing loss function.

Figure 3 illustrates a first implementation of a method for calculating the post processing loss function. In this embodiment, in a step E1, a distortion is computed, between the input signal and a first latent representation. This first latent representation may be:

- the latent representation of signal x obtained by the encoder of figure 1, corresponding to an encoding without further post-processing,

 - the output of the previous iteration of the post-processing function, $z^{(i+1)}$

 - the output of a previous iteration of the post-processing function, $z^{(j)}$, with j<i

The distortion is calculated by the following formula:

[MATH. 6] $dist(z_{in}^{(i)}) = \left\| x - D(z_{in}^{(i)}) \right\|^2$ where $D(z_{in}^{(i)})$ represents the decoded version of $z_{in}^{(i)}$ .

In a step E2, a rate computation is performed taking as input $z_{in}^{(i)}$ ,obtaining $rate\left(z_{in}^{(i)}\right)$ .

Then, in a step E3, the post processing loss function is computed using the following formula:

$$[\text{MATH. 7}] \; L_{pp}(z_{in}^{(i)}; \theta^*) = dist_{pp}(z_{in}^{(i)}) + \lambda_{pp}.rate(z_{in}^{(i)})$$

In a step E4, the loss function is minimized using gradient descent and back propagation according to the following formula:

$$[\text{MATH. 8}] \; z_{out}^{(i)} = z_{in}^{(i)} - \eta \nabla_z L_{pp}^{(i)}(z_{in}^{(i)}; \theta^*)$$

As mentioned with reference to figure 2, the post processing loss function may be the same as the training loss function or may be different. To this end, we may have:

$$( \; dist_{train} = dist_{pp} \; \text{or} \; \lambda_{train} = \lambda_{pp} \; )$$

or

$$( \; dist_{train} \neq dist_{pp} \; \text{or} \; \lambda_{train} \neq \lambda_{pp} \; )$$

or

$$(dist_{train} \neq dist_{pp} \; \text{and} \; \lambda_{train} = \lambda_{pp} \; )$$

or

$$( \; dist_{train} \neq dist_{pp} \; \text{and} \; \lambda_{train} \neq \lambda_{pp})$$

or

$$(dist_{train} = dist_{pp} \; \text{and} \; \lambda_{train} \neq \lambda_{pp})$$

or

$$(dist_{train} = dist_{pp} \text{ and } \lambda_{train} = \lambda_{pp})$$

Figure 4 illustrates a second implementation of a method for calculating the post processing loss function.

Figure 4 more specifically addresses the calculation of a post-processing function where an auxiliary signal is introduced in order to apply a rate distortion optimization (RDO) strategy dedicated to the content of the input signal without the need of training back the NN encoder 101 and NN decoder 201 to apply a specific RDO strategy. The auxiliary signal may be:

- A distortion mask comprising weights associated with at least some pixels of the input signal,
- A spatial identification of at least one group of pixels of the input signal,
- A patch to be applied on at least one part of the decoded input signal.

The auxiliary signal Aux may be transmitted as metadata, for instance in SEI (Supplementary Enhancement Information) messages as used by some compression standards.

To this end, an auxiliary signal "Aux" may be introduced for a calculation of the distortion in a step S1. In this implementation, the distortion is computed according to the following formula:

$$[\text{MATH. 9}] \quad dist_{pp}(z_{in}^{(i)}; \theta^*) = \left\| (x - D(z_{in}^{(i)})) \odot Aux \right\|^2$$

where $D(z_{in}^{(i)})$ represents the decoded version of $z_{in}^{(i)}$, $\odot$ represents a pixel-wise matrix multiplication operation.

The rate computation step S2 may be the same as the rate computation step E2 and is not repeated here.

The loss computation step S3 may be the same as the loss computation step E3 where distortion $dist_{pp}(z_{in}^{(i)})$ value is the one computed in step S1.

The back propagation step S4 may be the same as the back propagation step E4 where the loss function value is the loss function value computed at step S3.

In this implementation of figure 4, the "Aux" signal may be a mask such as a pixel-wise Region of interest mask M. This mask applies different weights on pixels of the region of interest in the decoded signal $z_{in}^{(i)}$. For instance, if one region of interest is detected in the input signal, image or video for instance, then a weight $w_1$ can be applied on the region of interest and a weight $w_2$ can be applied on the one or more other region with $w_1 > w_2$. The mask consists in the original image where each pixel value of a ROI may be multiplied by said weight $w_1$, and each pixel value of a non ROI may be multiplied by said weight $w_2$ and the distortion value is then:

$$[\text{MATH. 10}] \quad dist_{pp}(z_{in}^{(i)}; \theta^*) = \left\| (x - D(z_{in}^{(i)})) \odot M \right\|^2$$

where $D(z_{in}^{(i)})$ represents the decoded version of $z_{in}^{(i)}$, $\odot$ represents a pixel-wise matrix multiplication operation.

In another implementation of figure 4, the "Aux" signal may be an array containing information for identifying/locating different regions of image and their associated distortion weight. In this implementation, the distortion computation could be implemented by processing identifiable regions one-by-one, computing their weighted distortion and progressively computing the overall weighted distortion.

In another implementation of figure 4, the Aux signal may be a patch which may be overlaid on the input signal x. It is known to add some logo for instance on images where the logo appearance after decoding should avoid any decoding artefacts, for instance when the decoded picture is intended to be displayed (maybe further to broadcasting). An example is given on figure 5 illustrating how the patch is applied on the decoded signal to obtain the overlaid signal $O^{(i)}$.

The present implementation, thanks to this post processing function, improves the input signal appearance after decoding when the patch is overlaid on the decoded input signal giving for iteration i of the post processing function, an overlaid signal $O^{(i)}$. To this end, the "Aux" signal may be used as the reference signal for computing the distortion. The distortion computed at step S1 becomes as follows:

[MATH. 12] $dist_{pp}(z_{in}^{(i)}) = \left\| O^{(i)} - D(z_{in}^{(i)}) \right\|^2$ where $D(z_{in}^{(i)})$ represents the decoded version of $z_{in}^{(i)}$ and $O^{(i)}$ represents the decoded image with the overlay.

According to this implementation, steps S2, S3 and S4 remain unchanged, except that step S3 uses the distortion computed with equation [MATH. 12].

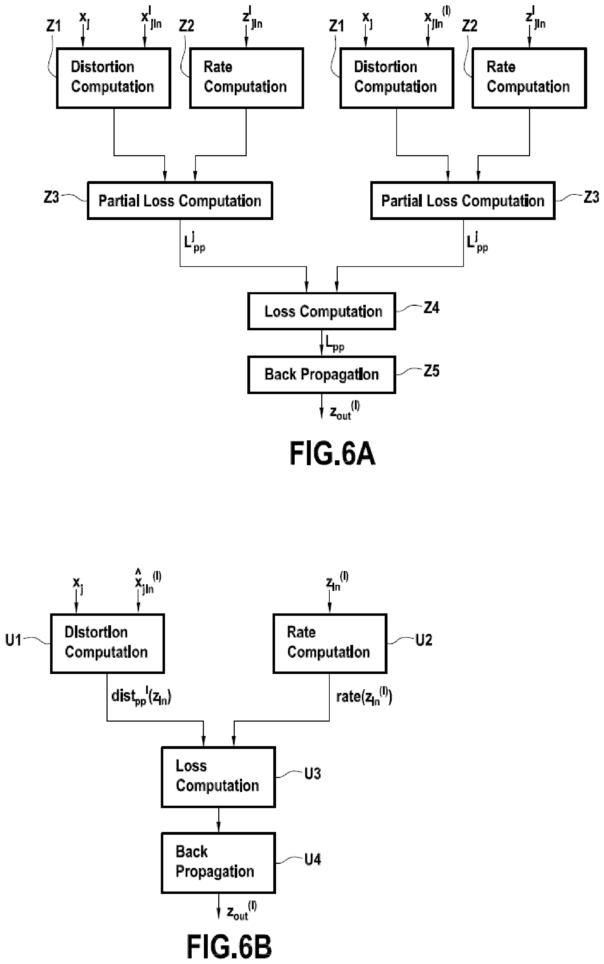

Figures 6a and 6b illustrate implementations where a post-processing loss function uses parameters which are different for some parts of the input signal. In other words, parts of the input signal, more precisely, of the input image, may be identified. By parameters, one can understand, the distortion, the rate or the rate distortion coefficient. Using different parameters enable to apply a different rate distortion optimization strategy on different parts of the image. The rate distortion strategy is therefore adapted to the content of the input signal.

It is to be noted that these parts may represent the full image when aggregated. For these parts, each of them, some of them, a selection of them, the loss function parameters may be adapted, according to one or several criteria. An example of parts splitting may be one part for the foreground and one part for the background. According to another example, faces can be each grouped into one part and other parts may be grouped into a second part. In other embodiments, each face can represent one part.

Figure 6a represents an implementation where at least two partial loss functions are computed. According to this implementation a rate distortion strategy may be applied according to the content coded by the input signal. More specifically, it may be envisioned to apply a different rate distortion strategy on at least two different parts of the input signal. This enables a spatial rate allocation.

When the input signal represents an image, still image, or images of a video signal, these parts may be representative of one or several region of interests of the image. Therefore thanks to the present disclosure, it becomes possible, without the need to train more than once the pair of encoder/decoder 101 and 201, to apply a different rate distortion strategy to different parts of the image.

According to this implementation of the disclosure, a plurality of parts is defined in an input image. These parts represent content for which a dedicated RDO strategy may be applied in order to improve the coding efficiency of these parts, which may be region of interests and which would for instance deserve higher bit rate than other regions of lower interest. In some embodiments, the different parts may represent the background and foreground of the image.

An input signal, more specifically but not limited to an input image, may be divided into a number of j parts, representing a spatial area of the image for instance. The identification of these parts may be done by using a signal, for instance an auxiliary signal as mentioned earlier, or may be encoded into signal x, for instance in specified header of signal x.

Therefore, it may be said that:

$$[\text{MATH 13}] \quad x = \cup \, x_j$$

with j the number of parts.

In the steps z1, a distortion is applied to the parts $x_j$ of the images. The j loss functions may have, for some of them, the same parameters, such as for instance the same distortion function or the same rate distortion coefficient. We may have as many distortion steps/functions as there are parts in the images, here j functions. However, if some of the j parts may, due to their content similarities for instance or for some other reasons, may be subject to a same distortion, therefore less than j steps/functions z1 may be needed. The distortion may be computed as

$$[\text{MATH. 14}] \quad dist(z_{jin}^{(i)}) = \left\| x_j - D(z_{jin}^{(i)}) \right\|^2$$

Where $z_{jin}^{(i)}$ represents the latent representation of $x_j$ and $D(z_{jin}^{(i)})$ represents the decoded version of $z_{jin}^{(i)}$

In the steps z2, a partial rate computation is performed. As mentioned for steps z1, we may have as many rate computation steps/functions as there are parts in the images, here j functions. However, if some of the j parts may, due to their content similarities for instance or for some other reasons, may be subject to a same rate computation, therefore less than j steps/functions may be needed.

In steps z3, a partial loss computation $l_{pp}^j$ is performed for the parts of the image for which at least a partial distortion has been calculated or a partial rate computation or both. To this end, a partial loss calculation may be performed such as:

$$[\text{MATH. 15}] \; l_{pp}^j(z_{jin}^{(i)}; \theta^*) = dist_{pp}(z_{jin}^{(i)}) + \lambda_{pp}.rate(z_{jin}^{(i)})$$

Once the j loss functions are computed in steps z3, a global loss function is obtained, step z4, as a fusion of the partial loss functions:

$$[\text{MATH. 16}] \; L_{pp}(z_{in}^{(i)}; \theta^*) = \sum_{j=1}^n \alpha_j \, L_{pp}^j$$

In a step z5, backpropagation is performed further to loss function minimization, using this aggregated loss function.

In an alternative, one can use one function, for instance a piecewise function, to define at least two different rate distortion strategies to be applied according to the content coded by the input signal. This alternative is illustrated in figure 6b.

In this embodiment, a distortion computation is applied on the parts of the images where the distortion is computed as a fusion of the plurality of partial distortions computed at the level of a part. There may be as many distortion functions as there are parts defined or less.

$$[\text{MATH. 17}] \; dist(z_{jin}^{(i)}) = \left\| x_j - D(z_{jin}^{(i)}) \right\|^2$$

$$[\text{MATH. 18}] \; dist_{pp}(z_{in}^{(i)}) = \sum_j \mu_j \left\| x_j - D(z_{jin}^{(i)}) \right\|^2$$

The post processing function is then computed using this distortion and a rate computation calculated at step U2 where this rate computation is the same as the one computed for the image.

$$[\text{MATH. 19}] \; l_{pp}(z_{in}^{(i)}; \theta^*) = dist_{pp}(z_{in}^{(i)}) + \lambda_{pp}.rate(z_{jin}^{(i)})$$

We are now going to disclose another aspect of the present disclosure concerning a method for encoding an input signal comprising

- Obtaining at least a second latent representation of said signal, by modifying a first Neural Network encoded latent representation of said input signal obtained from a neural network encoder which coefficients are frozen, by using a metric based on

  - said input signal,
  - a random signal, and
  - a decoded signal obtained from the decoding of the input signal, said encoded input signal being encoded by said neural network encoder, said decoding being obtained from a neural network decoder which coefficients are frozen.

According to this aspect of the present disclosure, there is no need to have available the first input latent representation for computing the post processing function. The counterpart of using a random signal may be the more complex computation of the minimization of the loss function.

In this aspect of the invention, the post processing function as described earlier takes as input, for a first iteration i, a random signal *rand$_i$* instead of taking the first latent representation $z_{in}^{(i)}$ . The random signal has the same size as the first latent representation $z_{in}^{(i)}$ .

For the next iterations, i>1, the random signal *rand$_i$* may be replaced by the output of the loss function of a former iteration.

According to this aspect, the metric is obtained by said iterative process by computing at least a post processing loss function, wherein the second latent representation is obtained as the output of said post processing loss function minimization.

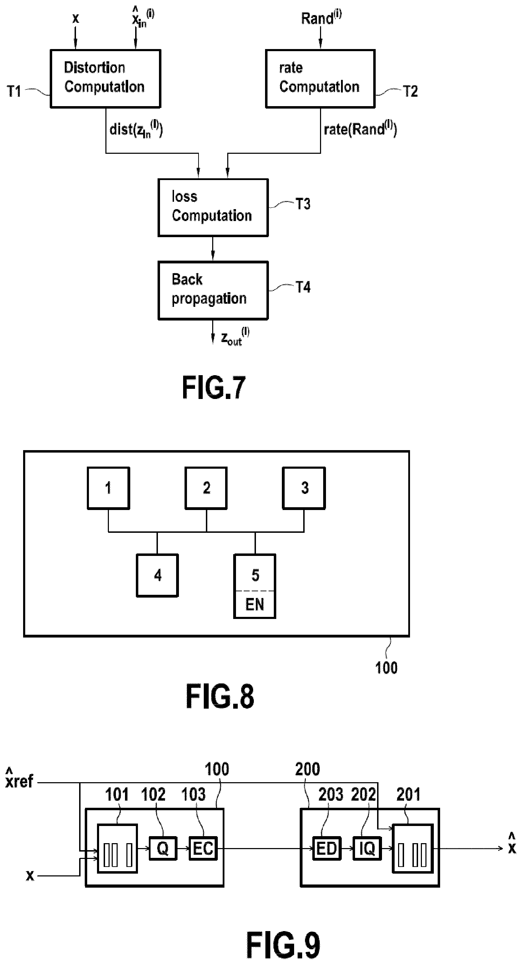

Figure 7 shows an implementation of this aspect of the disclosure. As can be seen from figure 7, the method comprises a first step T1, for computing a distortion between the input signal x and said decoded input signal.

In a step T2, a rate computation is performed using the random signal *rand$_i$*.

The computations of steps T1, T3 and T4 may be the same respectively as the ones of steps E1, E3 and E4 of figure 3.

All the implementations given with reference to the first aspect of the invention may be implemented in this second aspect of the invention. More precisely, the embodiments of figure 3, figure 4 and figure 6 may be applied to this aspect of the disclosure. For instance, more than one post processing function may be used, and may be used for different parts of an input signal, one post processing function with its defined parameters for each part or for several parts. One auxiliary signal may also be used, such as a patch, a mask...

In other words, one main difference in this aspect of the invention consists in using as input of the metric, a random signal instead of using a first latent representation.

Accordingly, this aspect of the invention enables also to apply an RDO strategy to a signal which is encoded with a pair of NN encoder/decoder trained together without having to perform another training of said pair of encoder/decoder to generate another latent representation.

Accordingly, this aspect of the invention enables also to apply an RDO strategy to a signal which is encoded with a NN encoder having frozen coefficients without having to perform another training of the NN encoder or the NN decoder, having also frozen coefficients, to generate another latent representation which is more adapted to the content of the input signal.

In some implementations, at least first Neural Network encoded representation of the input signal is obtained by an encoding method computing a training loss function, the training loss function and the post processing loss function being the same functions.

In some implementations, at least first Neural Network encoded representation of the input signal is obtained by an encoding method computing a training loss function, the training loss function and the post processing loss function are different functions.

In some implementations, the iteration process computes at least two post processing loss functions, the at least two post processing loss functions being applied on different parts of the input signal.

In some implementations, when the input signal is representative of an image or a video signal, the at least two parts of the input signal are representative, at least for one of them, of a region-of-interest.

In some implementations the training loss function and the post processing loss function are function of a distortion factor, and a rate factor multiplied by a rate-distortion coefficient, and the loss function and the processing function parameters differ in their rate-distortion coefficient values.

In some implementations, the training loss function and the post processing loss function are function of a distortion factor, and a rate factor multiplied by a rate-distortion coefficient, and the loss function and the processing function parameters differ in their distortion factor.

In some implementations, the post processing loss function receives as input an auxiliary signal comprising information representative of said parts of the input signal.

In some implementations, the information comprised in said auxiliary signal is chosen among at least one of:

- A distortion mask comprising weights associated with at least some pixels of the input signal,
- A spatial identification of at least one group of pixels of the input signal,
- A patch to be applied on at least one part of the decoded input signal.

In some implementations, when said auxiliary signal is a distortion mask, the post processing loss function computes a distortion factor based on pixel-wise multiplication of the distortion mask by a difference between the input signal and the corresponding decoded signal.

In some implementations, the auxiliary signal is a patch, the post processing loss function computes an overlay signal based on the decoded signal and the patch and computes a distortion factor based on the difference between the computed overlay signal and the decoded signal.

The present disclosure concerns also an apparatus for encoding an input signal comprising one or several processors configured alone or in combination to

- Obtain at least a second latent representation of the input signal, by modifying a first Neural Network encoded latent representation of the input signal obtained from a neural network encoder which coefficients are frozen, by using a metric based on
- the input signal,
- the first Neural Network encoded latent representation, and
- a decoded signal decoding of the first Neural Network encoded latent representation of the input signal, obtained from a neural network decoder which coefficients are frozen.

Figure 8 illustrates an example of an hardware architecture of an encoder according to some implementations of the present disclosure and for instance the encoder 100 of figure 2.

To this end, the encoder has the hardware architecture of a computer. As shown in Figure 8, the encoder comprises a processor 1. Although illustrated as a single processor 1, two or more processors can be used according to particular needs, desires, or particular implementations of the encoder. Generally, the processor 1 executes instructions and manipulates data to perform the operations of the encoder and any algorithms, methods, functions, processes, flows, and procedures as described in the present disclosure.

The encoder may also comprise communication means 5. Although illustrated as a single communication means 5 in Fig. 3, two or more communication means may be used according to particular needs, desires, or particular implementations of the decoder. The communication means can be used by the encoder for communicating with another electronic device that is communicatively linked with it, and for instance a decoding device. Generally, the communication means 5 may comprise logic encoded in software, hardware, or a combination of software and hardware. More specifically, the communication means 5 can comprise software supporting one or more communication protocols associated with communications to communicate physical signals within and outside of the illustrated decoder.

The encoder may also comprise a random access memory 2, a read-only memory 3, and a non-volatile memory 4. The read-only memory 3 of the encoder constitutes a recording medium conforming to the disclosure, which is readable by processor 1 and on which is recorded a computer program PROG_EN conforming to the present disclosure, containing instructions for carrying out the steps of the method for encoding an input signal according to the present disclosure.

The program PROG_EN defines functional modules of the encoder, which are based on or control the aforementioned elements 1 to 5 of the encoder, and which may comprise in particular:

- a NN based encoder 101 for encoding the input video signal x into a first latent representation,

- a Post-processing computing module 300,

- a quantizer module 102,

- an entropy coding module 103,

- a bitstream generator for generating the bitstream B,

- A transmission interface TX for transmitting the encoded signal B.

An example of such a program is described below:

Input: x, $\lambda$, $\Theta^*$, E, D, C

Parameters:$\eta^0$, N, $\beta$

Output: $z^*$

$$z^0 \leftarrow E(x, \Theta^*)$$

For $i := 0\ to\ N-1$ do

$$\eta^i \leftarrow \eta^0/(1+(\beta*i))$$

$$\hat{x}^i \leftarrow D(z^i; \Theta^*)$$

$$rate^i \leftarrow EC(z^i)$$

$$dist^i \leftarrow \left\|x - \hat{x}^i\right\|^2$$

$$l_\lambda(z^i; \Theta^*) \leftarrow dist^i + \lambda rate^i$$

$$z^{i+1} \leftarrow z^i - \eta^i \nabla_z l(z^i; \Theta^*)$$

End for

$$z^* \leftarrow z^{(N-1)}$$

Figure 9 represents an alternative to figure 1 for computing a first latent representation.

According to some implementations, at least one additional frame of video, other than said current input signal, is used for the computation of the loss function, where the encoding of said at least one additional frame is dependent from the decoded signal of current input signal (e.g. for motion computation).

One advantage of this implementation is that taking into account at least one next frame frame(s) to encode enables a more "global" optimization of current latent representation, in contrast to a "local" optimization with taking into account only the current input signal. Such global optimization provides a second latent representation that is, not only better for current input signal, but also better for the additional frame that depends on the current input signal.

By a next frame, one may understand a next frame linked to a temporal order of the image frames or to an order of display but not only. A next frame may also be related to an order of coding the pictures. In some embodiments, a next frame may be related to the GOP (Group Of Pictures) structure of the encoded images when they are encoded using a GOP structure.

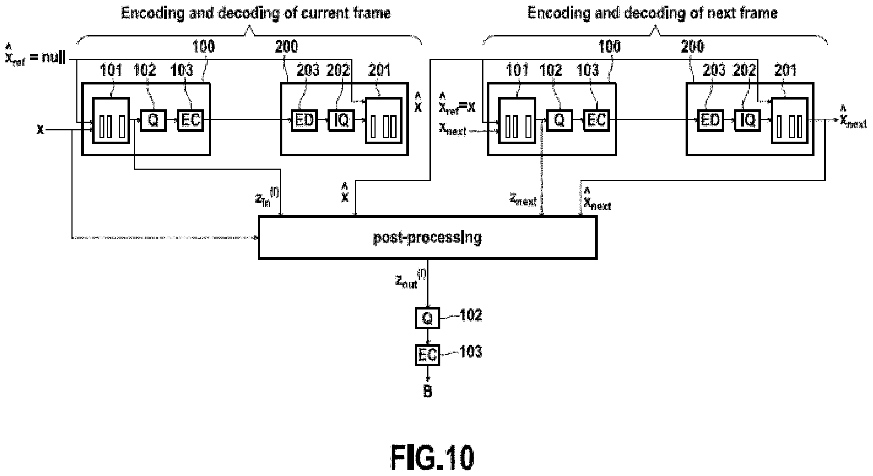

Figure 10 illustrates an implementation where a next frame is used for computing the post processing. In this implementation, the following method is executed for an iteration:

-    Obtain the first neural network latent representation $z_{in}^{(i)}$ of current input signal x by using a neural network encoder which coefficients are frozen

-    Decode said first neural network latent representation $z_{in}^{(i)}$ of said current input signal using neural network decoder which coefficients are frozen, and obtain a first decoded signal $\hat{x}$ of current input signal,

-    Obtain a neural network latent representation of said at least one additional frame, denoted as *xnext,* by using said neural network encoder. This step has to refer to said first decoded signal of current input signal due to the above temporal dependency and expressed in [MATH. 20]. In this equation, the notation $E(- \mid z_{in}^{(i)})$ indicates that the computation of function E(-) is subject to prior information given by $z_{in}^{(i)}$. In other words, [MATH. 20] encodes frame $x_{next}$, by referring to current frame, whose latent representation is given by $z_{in}^{(i)}$ :

$$[\text{MATH. 20}] \quad z_{next} = E(x_{next}; \theta^* \mid z_{in}^{(i)})$$

- Decode said neural network latent representation of said at least one additional frame using said fixed neural network decoder, and obtain a decoded signal of said at least one additional frame denoted as $\hat{x}_{next}$.

- let $\omega$ be a weight coefficient (between zero and one) to determine how much $x_{next}$ contributes to the final loss function. It has been assessed that the value of $\omega = 0.5$ usually results in higher compression performance compared to other values of $\omega$.

- Compute distortion of said first decoded signal of current input signal $dist_{pp}(z_{in}^{(i)})$ as well as distortion of said decoded signal of at least one additional frame $dist_{pp}(z_{next})$. Add the two distortions using the weight defined by $\omega$ and obtain a combined distortion:

$$[\text{MATH. 21}] \quad dist^{comb} = \omega . dist_{pp}(z_{in}^{(i)}; \theta^*) + (1 - \omega)dist_{pp}(z_{next}; \theta^*)$$

- Compute rate of said first neural network latent representation of current input signal $rate(z_{in}^{(i)})$, as well as rate of said neural network latent representation of at least one additional frame $rate(z_{next})$. Add the two rates using the weight defined by $\omega$ and obtain a combined rate:

$$[\text{MATH. 22}] \quad rate^{comb} = \omega . rate(z_{in}^{(i)}) + (1 - \omega)rate(z_{next})$$

- Compute loss function using the combined rate and combined distortion:

$$[\text{MATH. 23}] \quad L_{pp}^{comb}(z_{in}^{(i)}; \theta^*) = dist^{comb} + \lambda_{pp} rate^{comb}$$

- Obtain said second latent representation $z_{out}^{i}$ of the input signal by minimizing said loss function:

$$[\text{MATH. 24}] \quad z_{out}^{(i)} = z_{in}^{(i)} - \eta \nabla_{z_{in}^{(i)}} L_{pp}^{comb}(z_{in}^{(i)}; \theta^*)$$

As can be seen from the above formula, the rate calculation is here also modified. In this implementation, $\lambda_{train} = \lambda_{pp}$ or $\lambda_{train} \neq \lambda_{pp}$

The embodiments of this invention may be implemented by computer software executable by a data processor, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

A number of embodiments have been described. Features of these embodiments can be provided alone or in any combination, across various claim categories and types. Further, embodiments can include one or more of the following features, devices, or aspects, alone or in any combination, across various claim categories and types.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" or "obtaining" various pieces of information. Determining the information may include one or more of, for example, estimating the information, calculating the information, predicting the information, or retrieving the information from memory.

## Claims

1. A method for encoding an input signal comprising

    - Obtaining at least a second latent representation ( $z_{out}^{(i)}$ ) of said input signal (x), by modifying a first Neural Network encoded latent representation ( $z_{in}^{(i)}$ ) of said input signal (x) obtained from a neural network encoder (101) which coefficients are frozen, by using a metric based on

       - said input signal (x),
       - said first Neural Network encoded latent representation ( $z_{in}^{(i)}$ ), and
       - a decoded signal obtained from the decoding of the first Neural Network encoded latent representation ( $z_{in}^{(i)}$ ), of said input signal (x), using a neural network decoder (201) which coefficients are frozen.

2. A method according to claim 1 wherein obtaining said at least second latent representation ( $z_{out}^{(i)}$ ) comprises an iterative process comprising at least one iteration (i), wherein said iteration process receives as input,

    - for a first iteration step, the first latent representation ( $z_{in}^{(i)}$ ) of the input signal (x), the input signal (x) and said decoded signal ($\hat{x}$) obtained from a decoding of said first latent representation ( $z_{in}^{(i)}$ ) and wherein,
    - for the next iteration steps, said first latent representation ( $z_{in}^{(i)}$ ) is replaced by the output of a former iteration step ( $z_{out}^{(i-1)}$ ).

3. A method according to claim 2 wherein said metric is obtained by said iterative process by computing at least a post processing loss function ($L_{pp}$) wherein said second latent representation ( $z_{out}^{(i)}$ ) is obtained as the output of said post processing loss function ($L_{pp}$) minimization.

4. A method according to claim 3 wherein said at least first Neural Network encoded representation ( $z_{in}^{(i)}$ ) of the input signal (x) is obtained by an encoding method computing a training loss function($L_{train}$), said training loss function ($L_{train}$) and said post processing loss function ($L_{pp}$) being the same functions.

5. A method according to claim 2 or 3 wherein said at least first Neural Network encoded representation ( $z_{in}^{(i)}$ ) of the input signal (x) is obtained from an encoder computing a training loss function ($L_{train}$), and said iteration process computes at least one processing loss function ($L_{pp}$) which is different from said training loss function ($L_{train}$).

6. A method according to claim 5 wherein said iterative process computes said post-processing loss function ($L_{pp}$), using parameters which are different for some parts (j) of the input signal.

7. A method according to claim 6 wherein, when said input signal (x) is representative of an image or a video signal, said at least two parts of the input signal are representative, at least for one of them, of a region-of-interest.

8. A method according to any of claims 5 to 7 wherein the training loss function ($L_{train}$), and the post processing loss function ($L_{pp}$), are function of a distortion factor *(dist)*, and a rate factor *(rate)* multiplied by a rate-distortion coefficient ($\lambda$), wherein said training loss function ($L_{train}$) and said post processing function ($L_{pp}$) parameters differ in their rate-distortion coefficient values ($\lambda$).

9. A method according to any of claims 5 to 8 wherein the training loss function ($L_{train}$), and the post processing loss function ($L_{pp}$) are function of a distortion factor *(dist)*, and a rate factor *(rate)* multiplied by a rate-distortion coefficient ($\lambda$), wherein said training loss function ($L_{train}$) and said post processing function ($L_{pp}$) parameters differ in their distortion factor *(dist)*.

10. A method according to any of claims 5 to 9 wherein the post processing loss function ($L_{pp}$) receives as input an auxiliary signal (Aux) comprising information representative of said parts of the input signal.

11. A method according to claim 10 wherein said information comprised in said auxiliary signal (Aux) is chosen among at least one of:

   a. A distortion mask comprising weights associated with at least some pixels of the input signal,
   b. A spatial identification of at least one group of pixels of the input signal,
   c. A patch to be applied on at least one part of the decoded input signal.

12. A method according to claim 11 wherein when said auxiliary signal (Aux) is a distortion mask, said post processing loss function ($L_{pp}$) computes a distortion factor based on pixel-wise multiplication of said distortion mask by a difference between said input signal (x) and the corresponding decoded signal ($\hat{x}$).

13. A method according to claim 11 wherein the auxiliary signal(Aux) is a patch, said post processing loss function ($L_{pp}$) computes an overlay signal ($O^i$) based on the decoded signal $\hat{x}$ and said patch and computes a distortion factor *(dist)*, based on the difference between said computed overlay signal ($O^i$) and said decoded signal ($\hat{x}$).

14. An apparatus for encoding an input signal comprising one or several processors configured alone or in combination to

   - Obtain at least a second latent representation ($z_{out}^{(i)}$) of said input signal (x), by modifying a first Neural Network encoded latent representation ($z_{in}^{(i)}$) of said input signal (x) obtained from a neural network encoder (101) which coefficients are frozen, by using a metric based on

      - said input signal (x),
      - said first Neural Network encoded latent representation ($z_{in}^{(i)}$),and
      - a decoded signal ($\hat{x}$) obtained from the decoding of the first Neural Network encoded latent representation ($z_{in}^{(i)}$), of said input signal (x), using a neural network decoder (201) which coefficients are frozen.

15. An apparatus according to claim 14 wherein said at least one processor is further configured to obtain said at least second latent representation ($z_{out}^{(i)}$) by iterating, at least once, using as input,

   - for a first iteration, the first latent representation ($z_{in}^{(i)}$) of the input signal (x), the input signal (x) and said a decoded signal ($\hat{x}$) obtained from a decoding of said first latent representation ($z_{in}^{(i)}$), and wherein,

   - for the next iteration, said said first latent representation ($z_{in}^{(i)}$) is replaced by the output of a former iteration

step ( $\dot{z}_{out}^{(i-1)}$ ).

16. An apparatus according to claim 15 further configured to obtain said metric, during iterating, by computing at least a post processing loss function ($L_{pp}$), wherein said second latent representation ( $\dot{z}_{out}^{(i)}$ ) is obtained as the output of said post processing loss function ($L_{pp}$) minimization.

17. An apparatus according to claim 16 wherein said at least first Neural Network encoded latent representation ( $\dot{z}_{in}^{(i)}$ ) of the input signal (x) is obtained from an encoder computing a training loss function ($L_{train}$) and said training loss function ($L_{train}$) and said post processing loss function ($L_{pp}$) being the same functions.

18. An apparatus according to claims 15 or 16 wherein said at least first Neural Network encoded representation ( $\dot{z}_{in}^{(i)}$ ) of the input signal (x) is obtained from an encoder computing a training loss function ($L_{train}$) and said iteration process computes at least one post processing loss function ($L_{pp}$) which is different from said training loss function ($L_{train}$).

19. An apparatus according to claim 18 wherein said iteration process computes said post-processing loss function ($L_{pp}$) using parameters which are different for some parts of the input signal.

20. A signal comprising a bitstream comprising coded data representative of a second latent representation of a signal, said second representation being obtained by modifying a first Neural Network encoded latent representation of said input signal obtained from a trained neural network encoder, by using a metric based on

   - said input signal (x),
   - said first Neural Network encoded latent representation ( $\dot{z}_{in}^{(i)}$ ),and
   - a decoded signal ($\hat{x}$) obtained from the decoding of the first Neural Network encoded latent representation ( $\dot{z}_{in}^{(i)}$ ), of said input signal (x), using a neural network decoder (201) which coefficients are frozen.

21. A computer program product comprising instructions which, when the program is executed by one or more processors, causes the one or more processors to perform the method of any of claims 1 to 13.

22. A computer readable storage medium having stored thereon instructions for causing one or more processors to perform the method of any of claims 1 to 13.

FIG.1

FIG.2

FIG.3

FIG.4

Input signal x   Decoded signal $\hat{x}$   Auxiliary signal Aux   overlaid signal

FIG.5

FIG.6A

FIG.6B

FIG.7

FIG.8

FIG.9

FIG.10

EP 4 361 887 A1

Europäisches
Patentamt

European
Patent Office

Office européen
des brevets

# EUROPEAN SEARCH REPORT

Application Number

EP 22 30 6617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/103839 A1 (VAN ROZENDAAL TIES JEHAN [NL] ET AL) 31 March 2022 (2022-03-31) * paragraphs [0100] - [0191]; figures 4,8,14 * | 1-22 | INV. G06N3/0455 G06N3/084 G06N3/088 H04N19/147 |
| A | LIU BOWEN ET AL: "Deep Learning in Latent Space for Video Prediction and Compression", 2021 IEEE/CVF CONFERENCE ON COMPUTER VISION AND PATTERN RECOGNITION (CVPR), IEEE, 20 June 2021 (2021-06-20), pages 701-710, XP034007303, DOI: 10.1109/CVPR46437.2021.00076 [retrieved on 2021-10-15] * Section 3.4 Rate-distortion control; page 706, left-hand column; figure 2 * | 1-22 | |
| A | KRISTIAN FISCHER ET AL: "Boosting Neural Image Compression for Machines Using Latent Space Masking", ARXIV.ORG, CORNELL UNIVERSITY LIBRARY, 201 OLIN LIBRARY CORNELL UNIVERSITY ITHACA, NY 14853, 7 October 2022 (2022-10-07), XP091336542, DOI: 10.1109/TCSVT.2022.3195322 * page 4, left-hand column; figures 2,4 * | 1-22 | TECHNICAL FIELDS SEARCHED (IPC) G06N H04N |

The present search report has been drawn up for all claims

| Place of search | Date of completion of the search | Examiner |
|---|---|---|
| The Hague | 23 March 2023 | Manfrin, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6617

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2023

| Patent document cited in search report | Publication date | Patent family member(s) | Publication date |
|---|---|---|---|
| US 2022103839 A1 | 31-03-2022 | US 2022103839 A1<br>WO 2022066368 A1 | 31-03-2022<br>31-03-2022 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BALLÉ ; JOHANNES ; VALERO LAPARRA ; EERO P. SIMONCELLI.** End-to-end optimized image compression. *arXiv:1611.01704,* 2016